# EUROPEAN PATENT SPECIFICATION

(11) **EP 2 138 476 B1**
(45) Date of publication and mention of the grant of the patent: **16.04.2014**
(21) Application number: 09466009.9
(22) Date of filing: 25.06.2009
(51) Int. Cl.: C04B 41/53, B01D 11/02

(54) **The extraction method of calcareous or pyritised fosils from calcareous rocks**
Verfahren zum Extrahieren von kalkhaltigen oder pyritisierten Fossilien aus kalkhaltigem Gestein
Procédé d'extraction de fossiles calcaires ou pyritisées de roche calcaire

(30) Priority: 25.06.2008 CZ 20080403
(43) Date of publication of application: 30.12.2009
(73) Proprietor: Ceská geologická sluzba, 118 21 Praha 1 (CZ)
(72) Inventor: Radek, Vodrázka, 53002 Pardubice (CZ)
(74) Representative: Danek, Vilém

(56) References cited:
- K. ZAGORSEK ET AL.: "Cretaceous Bryozoa from Chrtniky (Bohemian Massif)", COUR. FORSCH.-INST. SENCKENBERG, vol. 257, 13 December 2006 (2006-12-13), pages 161-177, XP002668492,

## Description

### Technical field

Method for the fields of Earth Science or industry for the extraction of calcified or pyritised fossils from calcareous rocks using sulphuric acid.

### Background Art

Calcified fossils, particularly macrofossils, have until now been extracted from calcareous rocks using mechanical preparation for the most part (hammers, chisels) or modifications thereof (vibrating tools, blasting with abrasives or strong water jets). The unsuitability of the use of chemical methods is due to the similar chemical composition of the macrofossils (composed of macrocrystalline calcite) and the surrounding rocks (containing microcrystalline calcite and clay minerals).

To the present time, the use of chemical methods originally developed for the extraction of calcified microfossils have been used to a very limited extent for the extraction of calcified macrofossils from calcareous rocks, these being based on: heating in sodium sulphate (Kirchner 1958); use of petroleum spirit and sodium carbonate (Bolli 1952); the use of sodium hydroxide (Williams-Mitchell 1948) and the use of concentrated (95% and higher) acetic acid (Bourdon 1956, 1962); Lethiers & Crasquin-Soleau 1988). The strong destructive effects on the surrounding rocks, which are accompanied by the disintegration of the macrofossils, make these methods unsuitable for extracting calcified macrofossils.

Zágor 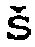 ek & Vávra (2000) and Nielsen & Jakobsen (2004) applied a modified version of the last mentioned method (concentrated acetic acid) and successfully obtained macrofossils from calcareous rocks. Their methods are however limited in their breadth of use, which is limited by the porosity of the calcareous rocks (Nielsen & Jakobsen 2004) and the destructive effects on anything other than massive fossil shells (which are however the majority).

Document of K. zágor 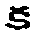 ek and R. Vodrá 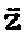 ka, Cour. Forsch.-Inst. Senckenberg, 257, 161-177 (2006) deals with determination and description of bryozoans from the locality Chrtniky (Bohemian Cretaceous Basin). However, it does not involve description of a new chemical preparation method. For the extraction of the calcified bryozoans from the marly limestones a various and numerous mechanical and chemical methods were applied in the following order:
1) washing of rock
2) separation of invertebrate fossils
3) Boiling of material in soda for several hours
4) Selected specimens were macerated in 38% sulphuric acid for two hours and then washed as usual. The remaining macerations were treated in boiling water and some specimens were cleaned with a high pressure water stream (water-blasting technique).
5) All specimens were cleaned in an ultrasonic bath before photography.

The use of these methods by authors (Zágor 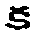 ek and Vodrå 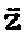 lka 2006) allowed extracting calcified bryozoans. Those specimens, which were selected to be macerated in 38% sulphuric acid (about 20% of the studied material) were, however, partly damaged (see e.g., fig 2, 4 and 5 on plate 3 in Zágor 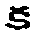 ek and Vodrá 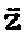 ka 2006).

### References:

BOLLI, H. 1952. Note on the disintegration of indurated rocks. Micropaleontologist, 6 (1), 46-48.
BOURDON, M. 1956. Études micropaléontologiques; utilisation de l'acide acetique dans la desagrégation des roches dures. Revue de L'institut Français du Pétrole, 12, 14-15.
BOURDON, M. 1962. Méthode de dégagement des microfossiles par acétolyse à chaud.
Compte Rendu Sommaire des Séances de la Société Géologique de France, 1962, 267-268.
KIRCHNER, z. M. 1958. A new method of hard-rock maceration. Micropaleontology, 4 (3), 327-328.
LETHIERS, F. and CRASQUIN-SOLEAU, S. 1988. Comment extraire les microfossiles a tests calcitiques des roches calcaires dures. Revue de micropaléontologie, 31 (1), 56-61.
NIELSEN, J. K. and JAKOBSEN, S. L. 2004. Extraction of Calcareous Macrofossils from the Upper Cretaceous White Chalk and Other Sedimentary Carbonates in Denmark and Sweden: The Acid-Hot Water Method and the Waterblasting Technique. Palaeontologia Electronica, 7 (4), 1-11.
MILLIAMS-MITCHELL, E. 1948. The zonal value of foraminifera in the Chalk of England. Proceedings of the Geologists Association, 59 (2), 91-112.
ZÁGOR 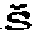 EK, K. and VÁVRA, N. 2000. A New Method for the Extraction of Bryozoans from Hard Rocks from the Eocene of Austria. Jahrbuch der Geologischen Bundesanstalt, 142 (2), 249-258.

### Disclosure of the invention

This method eliminate the above mentioned shortcomings and allows for the extraction of calcified or pyritised fossils from surrounding calcareous rocks. It is based on the differential speeds for dissolution of macrocrystalline and microcrystalline calcite in 38% sulphuric acid. The method is also effective due to the reaction of sulphuric acid with the clay minerals contained in the calcareous rocks. The method is suitable for extracting macrofossils from marlstones, marly limestones and other calcareous rocks or rocks containing limestone. Its main advantages in comparison to other current known chemical methods for extracting calcified microfossils and macrofossils from calcareous rocks are: 1) the non-destructiveness of the method, i.e. its ability to dissolve the calcareous rock only from the surface of the macrofossils, thus preventing its dissolution; 2)its ability to dissolve calcareous rock with higher concentrations of calcium carbonate (for marly limestone up to 90%); 3) its ability to dissolve calcareous rocks with low porosity (e.g. marly limestone); 4) the low costs and speed of the method.

The equipment for the extraction of calcified or pyritised fossils from calcareous rocks consists of a bath of sulphuric acid, a drying cabinet or established drying equipment and cleaning equipment, in particular 1) a water blaster (with a water pressure of 10-18MPa at a distance of 10 mm from the orifice) or 2) an ultrasonic water-bath, or 3) a soft brush or paintbrush

### Procedure description:

Preparation of the specimen for extraction involves the drying of the fossil and surrounding rock. Excessive moisture lowers the concentration of the acid and changes its reactive properties. For wet rocks, drying them at a temperature of 100°C for 24 hours is sufficient. To increase the effect of the chemical preparation, rough mechanical preparation is recommended, consisting of removal of the thickest crusts of matrix on the surface of the fossil, using some of the classical methods of mechanical preparation.

The main fossil cleaning process consists of the reaction of 38% sulphuric acid with the calcareous rock. The dry specimen is submerged in a glass or plastic bath of 38% sulphuric acid covered by a lid. Small particles of sediment begin to detach from the rock surface, and subsequently form a soupy mud. The period of submersion in the bath varies depending on the type of shell mineralisation and should not exceed 2 hours, as after this time there is a risk of damage to the calcified shell. After removal from the bath, the specimen must be quickly washed under flowing tepid water to remove remnants of the acid and then placed in a neutralising bath for a period of 2-6 hours, e.g. in a solution of sodium carbonate prepared with 5 grams of sodium carbonate to one litre of water, in order that the required pH of the specimen be reached. The final step in the procedure consists of the removal of the white deposit from the fossil surface (chemically degraded sediment). Removal can be done using: 1) a water blaster (with a water pressure of 10-18MPa at a distance of 10 mm from the orifice) or 2) an ultrasonic water-bath, or 3) a soft brush or paintbrush. The fossil is subsequently dried.

### List of drawings

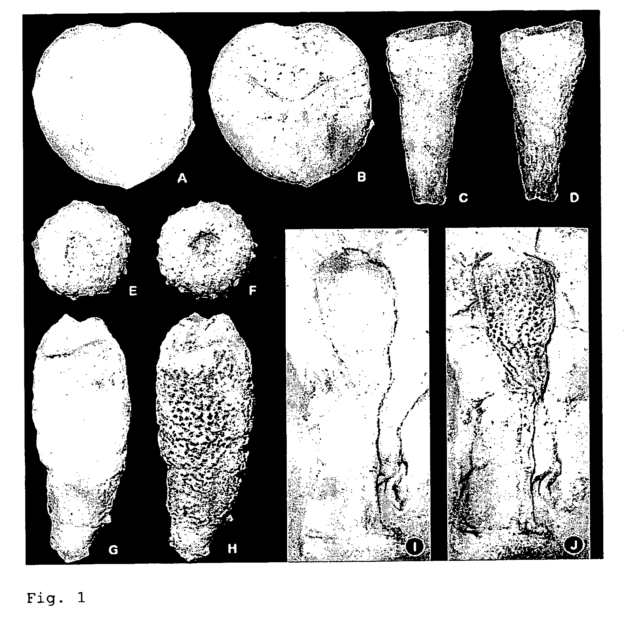

Fig 1: Comparison of macrofossils before and after application of the new method based on maceration in 36% to 40% sulphuric acid, best 38% sulphuric acid. The comparison demonstrates exceptional cleaning of the marly limestone from the fossil surfaces.
A-B, *Micraster* cf. *leskei* calcified echinoid shell (Desmoulins, 1837), inv. no. RV92, magnified 0.7x;
A, before application of method;
B, after application of method;
C-D, *Ventriculites chonoides* calcified sponge skeleton (Mantell, 1822), inv. no. RV93, magnified 0.8x;
C, before application of method;
D, after application of method;
E-F, *Gauthieria radiata* calcified echinoid shell (Sorignet, 1850), inv. no. RV94, magnified 1.5x;
E, before application of method;
F, after application of method;
G-H, *Ventriculites alcyonoides* calcified and partly pyritised sponge skeleton Mantell 1822, inv. no. RV95, magnified 0.8x;
G, before application of method;
H, after application of method;
I-J, *Ventriculites alcyonoides* calcified sponge skeleton Mantell 1822, inv. 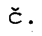 RV96, magnified 1.1x;
I, before application of method;
J, after application of method;

The pictured specimens all come from the Úpohlavy quarry near Lovosice, Czech Republic (Bohemian Cretaceous Basin sediments, Upper Cretaceous era). In the shots from before preparation the specimens are covered by marly limestone. The fossils were bleached with ammonium chloride before being photographed. These specimens are housed in the Collections of the Czech Geological Survey.

### Examples

The method was successfully applied to obtain fossils of calcified sponges, corals, worms, oysters, brachiopods, echinoderms and bryozoa from calcareous siltstone and marly limestone (Upper Cretaceous sediments from the areas of Chrtniky u Choltic, Nákle u He 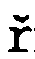 manova M 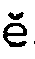 stce, Pla 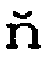 any u Kolina). It was also successfully used for the preparation of sponges from Upper Cretaceous limestone in Lower Saxony (at Höver, Misburg), phosphatised fossil cores from marly limestone at Bý 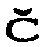 kovice u Litom 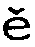 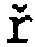 ic and Litom 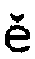 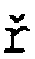 ice and numerous macrofauna from Upper Cretaceous marly limestone rocks in the Pooh 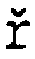 í region (Úpohlavy, Kystra, Lene 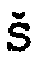 ice). An example of the use of the method and the results of the procedure is illustrated by the attached picture (Picture 1). The method for extracting calcified or pyritised fossils from calcareous rocks can be summarised into individual steps: A) the specimen is prepared for extraction by drying the fossil and surrounding rock with the use of atmospheric drying or established drying equipment; B) the specimen is removed from the drying equipment and the dry specimen is submerged in a bath of 38% sulphuric acid which is covered by a lid; C) the specimen is left in the bath with 38% sulphuric acid for a period of 1 minute to 2 hours; D) the specimen is removed from the bath and is washed under a stream of tepid water, ideally distilled water; E) the specimen is submerged in a neutralising bath for a period of 2 to 6 hours; F) the specimen is removed from the neutralising bath and cleaned; G) the specimen is dried.

### Industrial utilisation

This method allows for the obtainment of calcified or pyritised fossils from calcareous rocks using an industrial method, which can be used in a number of branches of industry. Disregarding the scientific value of these macrofossils (important for palaeontology, palaeoecology, biostratigraphy, palaeobiogeography and sedimentology), two main commercial-industrial uses can be seen:

### 1) Economic use in the mining industry.

Mining companies, focused on the mining of fossil fuels (oil, natural gas, coal) use fossils as the sole and often irreplaceable source of information for locating fossil fuel deposits and determining their properties - i.e. oil or natural gas reservoirs or coal deposits. It is well known that macrofossils allow for the determination of the age of the rocks and the relationships between sedimentary bodies. The main condition for the usability of macrofossils for this determination is how well they can classified. Calcified macrofossils from calcareous rocks which have not been cleaned or prepared cannot generally be classified and it is this obstruction which this new method overcomes.

### 2) Fossil sales.

Many businesses trade such fossils as objects for collections, as decoration, jewellery or souvenirs both in the retail and wholesale (mainly abroad) industries. One hindrance to the commercial use of some macrofossils (particularly for calcified or pyritised ammonites, bivalves, gastropods etc.) is their unappealing look caused by rock deposits on the surface of the microfossils. Currently, calcified macrofossils used commercially are extracted from calcareous rocks using mechanical preparation for the most part, which is difficult time-wise and financially (when using abrasives). This new method here described allows for the cleaning of macrofossils cheaply and quickly and enables (or increases) their commercial viability.

## Claims

1. Method for extraction of calcified or pyritised fossils from calcareous rocks using bath of 38% sulphuric acid **characterized by** being made up of the following steps:
A) preparation of specimen for extraction, involving drying the fossil and surrounding rock;
B) submerging the dry specimen in a bath of sulphuric acid, which is covered by a lid;
C) the specimen is left in the bath for a period of 1 minute to 2 hours;
D) removal of the specimen from the bath and washing it under a stream of tepid water;
E) submerging the specimen in a neutralizing bath for a period of 2 to 6 hours;
F) removal and cleaning of the specimen;
G) drying of the specimen.

2. Method for extracting calcified or pyritised fossils in accordance with claim 1, **characterized by** the drying in step A) taking place over a period of 24 hours at a temperature of 100°C.

3. Method for extracting calcified or pyritised fossils in accordance with claim 1, **characterized by** before step A) beginning, mechanical preparation being undertaken by removing the largest rock accumulations on the fossil surface with mechanical preparation methods using a manual laboratory pick.

4. Method for extracting calcified or pyritised fossils in accordance with claim 1, **characterized by** the water used for washing the specimen in accordance with step D) being distilled water.

5. Method for extracting calcified or pyritised fossils in accordance with claim 1, **characterized by** the neutralization of the specimen in accordance with step E) being undertaken using a solution of sodium carbonate in the amount of 5 grams of sodium carbonate to a one litre of water.

6. Method for extracting calcified or pyritised fossils using ultrasound bath in accordance with claim 1, **characterized by** removal and cleaning of the specimen in step F) is made by using a water blaster with a water pressure of 10-18 MPa at a distance of 10mm from the orifice or an ultrasonic water bath.

7. The use of 38% sulphuric acid as the agent for dissolving the rocks to extract the pyritised fossils from calcareous rocks.

## Patentansprüche

1. Verfahren zur Gewinnung der verkalkten oder pyritisierten Fossilien vom kalkhaltigen Gestein unter der Benutzung der 38%igen Schwefelsäurelösung, **dadurch gekennzeichnet, dass** das Verfahren folgende konsequente Schritte umfasst:
A) Vorbereitung der Probe für Gewinnung, einschließlich der Trocknung des Fossils und des umgebenden Gesteins;
B) Eintauchen der trockenen Probe in die Schwefelsäurelösung, die mit einem Deckel gedeckt ist;
C) die Probe ist in der Schwefelsäurelösung für die Zeit von 1 Minute bis 2 Stunden gelassen;
D) Herausnahme der Probe aus der Schwefelsäurelösung und ihre Reinigung mit lauwarmem Wasser;
E) Eintauchen der Probe ins Neutralisationsbad für die Zeit von 2 bis 6 Stunden;
F) Herausnahme und Reinigung der Probe;
G) Trocknung der Probe.

2. Verfahren zur Gewinnung der verkalkten oder pyritisierten Fossilien nach Anspruch 1, **dadurch gekennzeichnet, dass** die Trocknung im Schritt A) 24 Stunden bei der Temperatur von 100°C abläuft.

3. Verfahren zur Gewinnung der verkalkten oder pyritisierten Fossilien nach Anspruch 1, **dadurch gekennzeichnet, dass** noch vor dem Anfang des Schritts A) die mechanische Präparation durchgeführt ist, die darin liegt, dass die größten Gesteinakkumulationen auf der Fossiloberfläche durch die mechanische Präparation mit einem Labormeißel beseitigt sind.

4. Verfahren zur Gewinnung der verkalkten oder pyritisierten Fossilien nach Anspruch 1, **dadurch gekennzeichnet, dass** das für die Reinigung der Probe nach dem Schritt D) benutze Wasser destilliertes Wasser ist.

5. Verfahren zur Gewinnung der verkalkten oder pyritisierten Fossilien nach Anspruch 1, **dadurch gekennzeichnet, dass** die Neutralisierung der Probe gemäß dem Schritt E) mit der Natriumkarbonatlösung aus 5 Gramm Natriumkarbonat pro Liter Wasser durchgeführt ist.

6. Verfahren zur Gewinnung der verkalkten oder pyritisierten Fossilien unter Benutzung des Ultraschallbads nach Anspruch 1 **dadurch gekennzeichnet, dass** die Herausnahme und Reinigung der Probe nach dem Schritt F) unter Benutzung eines Hochdruckreinigers unter Wasserdruck von 10-18 MPa mit Abstand 10mm von der Mündung oder unter Benutzung der Ultraschallwasserbads durchgeführt ist.

7. Nutzung der 38%igen Schwefelsäurelösung als Agens für die Auflösung des Gesteins um die pyritisierten Fossilien vom kalkhaltigen Gestein zu gewinnen.

## Revendications

1. Méthode pour l'extraction de fossiles calcifiés ou pyritisés de roches calcaires, en utilisant un bain d'acide sulfurique à 38%, caractérisé en étant constitué des étapes suivantes:
A) la préparation de l'échantillon pour l'extraction impliquant le séchage du fossile et la roche environnante;
B) l'immersion de l'échantillon sec dans un bain d'acide sulfurique qui est recouverte par un couvercle,
C) l'échantillon est laissé dans le bain pendant une période de 1 minute à 2 heures,
D) le retrait de l'échantillon du bain et son lavage sous un courant d'eau tiède,
E) l'immersion de l'échantillon dans un bain de neutralisation pendant une période de 2 à 6 heures,
F) l'enlèvement et le nettoyage de l'échantillon,
G) le séchage de l'échantillon.

2. Procédé d'extraction de fossiles calcifiés ou pyritisés selon la revendication 1, **caractérisé par** le séchage de l'étape A) qui se déroule sur une période de 24 heures à une température de 100 ° C.

3. Procédé d'extraction de fossiles calcifiés ou pyritisés selon la revendication 1, **caractérisé en ce que**, avant une étape A) début, la préparation mécanique est réalisée en enlevant les plus grandes accumulations de roche à la surface du fossile avec les méthodes de préparation mécanique au moyen d'un laboratoire sélection manuelle.

4. Procédé d'extraction de fossiles calcifiés ou pyritisés selon la revendication 1, **caractérisé par** l'eau utilisée pour le lavage de l'échantillon conformément à l'étape D) étant l'eau distillée.

5. Procédé d'extraction de fossiles calcifiés ou pyritisés selon la revendication 1, **caractérisé par** la neutralisation de l'échantillon conformément à l'étape E) étant effectuée en utilisant une solution de carbonate de sodium dans la quantité de 5 g de carbonate de sodium pour un litre d'eau.

6. Procédé d'extraction de fossiles calcifiés ou pyritisés en utilisant un bain à ultrasons selon la revendication 1, **caractérisé par** l'enlèvement et le nettoyage dans l'étape F) est réalisée en utilisant une sableuse à eau avec une pression d'eau de 10 à 18 MPa, à une distance de 10 mm à partir de l'orifice ou un bain d'eau à ultrasons.

7. L'utilisation d'acide sulfurique 38% comme l'agent pour dissoudre les rocs pour extraire les fossiles pyritisés de roches calcaires.
